# Europäisches Patentamt

# European Patent Office

# Office européen des brevets

(19)

(11) Veröffentlichungsnummer: **0 291 782**
**B1**

(12) **EUROPÄISCHE PATENTSCHRIFT**

(45) Veröffentlichungstag der Patentschrift:
14.11.90

(51) Int. Cl.⁵: **B27B 5/06**

(21) Anmeldenummer: **88107273.0**

(22) Anmeldetag: **06.05.88**

(54) Vorrichtung zur Einstellung von Eingriffstiefen eines Vorritzsägeblattes während des Vorschubes eines verfahrbaren Sägeaggregates.

(30) Priorität: **14.05.87 DE 3716086**

(43) Veröffentlichungstag der Anmeldung:
**23.11.88 Patentblatt 88/47**

(45) Bekanntmachung des Hinweises auf die Patenterteilung:
**14.11.90 Patentblatt 90/46**

(84) Benannte Vertragsstaaten:
**AT BE CH ES FR GB IT LI NL SE**

(56) Entgegenhaltungen:
**AT-B- 364 515**
**DE-A- 2 502 864**
**DE-A- 2 540 109**

(73) Patentinhaber: **Jenkner, Erwin, Lindenstrasse 13,
D-7261 Gechingen-Bergwald(DE)**

(72) Erfinder: **Jenkner, Erwin, Lindenstrasse 13,
D-7261 Gechingen-Bergwald(DE)**

(74) Vertreter: **Becker, Maria, Dipl.-Phys., Auf dem Haigst 29,
D-7000 Stuttgart 70(DE)**

ACTORUM AG

## Beschreibung

Die Erfindung betrifft eine Vorrichtung zur Einstellung von Eingriffstiefen eines Vorritzsägeblattes während des Vorschubes eines verfahrbaren Sägeaggregates beim Vorritzen der Plattenunterseite von Werkstückplatten, mit den Merkmalen des Oberbegriffes von Patentanspruch 1.

Plattenaufteilsägen sind üblicherweise mit einem unter Tisch verfahrbaren Sägeaggregat ausgestattet, das mit einem Kreissägeblatt und einem diesem vorgeschalteten Vorritzsägeblatt ausgerüstet ist, die bei der Durchführung des Trennschnittes in Vorschubrichtung aus der Werkstückauflagefläche der Plattenaufteilsäge austauchen.

Durch das beim Vorschub zuerst und entlang der Trennebene nur wenige mm tief in die Unterseite einer Werkstückplatte eindringende Vorritzsägeblatt ist dabei sichergestellt, dass der eigentliche, durch das Kreissägeblatt zu bewerkstelligende Trennschnitt an den unteren Kanten der werkstückseitigen Trennflächen keine Aussplitterungen verursachen kann.

Sind dabei Werkstückplatten aufzuteilen, die entlang einer oder zweier sich senkrecht zur Trennebene und parallel zur Plattenauflagefläche erstreckender Plattenkanten in deren oberem Kantenbereich abgerundet und ggf. auf ihrer gesamten oberen Fläche beschichtet sind (postformig), so ist im Bereich derjenigen abgerundeten Plattenkante, die im Zuge eines Trennschnittes zuletzt durchrennt wird, ein spezieller Verlauf der Führungsnut in der Werkstückplatte notwendig. Es muss nämlich sichergestellt sein, dass an dem im Querschnitt gesehen konvex gekrümmten Flächenbereich dieser Plattenkante durch das aus derselben austretende Kreissägeblatt das Plattenmaterial nicht aussplittern kann.

Dies wird dadurch wirksam verhindert, dass in der Vorschubendphase die Eingriffstiefe des Vorritzsägeblattes sukzessive derart vergrössert wird, dass die Vorritznut, bezogen auf den Querschnitt dieser Plattenkante, exakt im Übergangspunkt des abgerundeten Stirnflächenteils in die obere ebene Plattenfläche aus der Werkstückplatte austritt.

Zu diesem Zweck ist ein im Sägeaggregat höhenverstellbar geführter, das Vorritzsägeblatt und dessen Antrieb tragender Support mit einem Tastglied ausgestattet, das in der Endphase der Vorschubbewegung des Sägeaggregates auf eine stationäre Leitfläche auftrifft, deren Verlauf die notwendige Hubbewegung des Supports bzw. Vorritzsägeblattes bewirkt.

Vor dem Zusammenwirken von Tastglied und Leitfläche bzw. zu Beginn eines Trennvorganges wird hingegen der Support aus einer unteren Ausgangsstellung in eine erste Zwischenstellung gesteuert, in welcher das Vorritzsägeblatt die Werkstückplatte an der Unterseite im Bereich der zuerst zu durchrennenden Plattenkante nur geringfügig, z.B. 1 mm tief, vorritzt, wonach es in eine zweite Zwischenstellung gesteuert wird, die es dann über den grössten Teil der Vorschubstrecke beibehält und dabei z.B. eine 3 bis 5 mm tiefe Vorritznut herstellt, bevor es schliesslich durch Leitfläche und Tastglied aus dieser Zwischenstellung, wie vorstehend erläutert, zum Durchtrennen der anderen Plattenkante nach oben gesteuert wird.

Die erzielte Genauigkeit der Schnittbewegung des Vorritzsägeblattes in der Endphase des Vorschubes war bisher aufgrund der durch Entlanggleiten des Tastgliedes an der Leitfläche bewerkstelligten Steuerbewegung des Supports bis zu einer Vorschubgeschwindigkeit von ca. 50 m/min ausreichend, um zu gewährleisten, dass die Vorritznut an der im oberen Bereich abgerundeten Plattenkantenfläche im Übergangspunkt des abgerundeten Kantenflächenteils in die obere ebene Plattenfläche aus der Werkstückplatte austritt.

Diese Art der Supportsteuerung lässt jedoch eine wesentliche Steigerung der Vorschubgeschwindigkeit, z.B. auf 120 m/min, nicht zu, ohne dass sich zugleich der Punkt verlagert, in welchem die Vorritznut aus der Werkstückplatte oben austritt. Dies ist durch Elastizitäten und Trägheiten der zu bewegenden Massen beim Auftreffen des Tastgliedes auf die Leitfläche begründet, was ausserdem eine Schlagwirkung durch die aufeinander auftreffenden Teile zur Folge hat, die sich sowohl auf die Schnittqualität als auch auf die Standzeit der miteinander zusammenwirkenden Teile nachteilig auswirkt.

Der Erfindung liegt deshalb die Aufgabe zugrunde, eine Vorrichtung mit den gattungsbestimmenden Merkmalen des Oberbegriffes von Patentanspruch 1 so zu verbessern, dass eine wesentliche Steigerung der Vorschubgeschwindigkeiten bis zu 120 m/min und mehr keine Verlagerung des Austrittspunktes des Vorritzsägeblattes in der Plattenoberseite zur Folge hat.

Diese Aufgabe wird erfindungsgemäss durch die kennzeichnenden Merkmale des Patentanspruches 1 gelöst.

Bei der erfindungsgemässen Vorrichtung läuft somit zum Hochfahren des Vorritzsägeblattes das durch die Betätigungsvorrichtung während des Einarbeitens der Vorritznut in einer Zwischenstellung ständig mit der Leitfläche in Berührung gehaltene Tastglied von dieser ab, wobei die Betätigungsvorrichtung nach der Tastgliedfreigabe den Support mit einer bestimmten Verstellgeschwindigkeit in dessen obere Endstellung steuern kann.

Diese Supportbewegung wird der Vorschubgeschwindigkeit des Sägeaggregates überlagert, wobei der Zeitpunkt des Ablaufs des Tastgliedes von der Leitfläche unter Berücksichtigung verschiedener Parameter, wie die gegebene Vorschubgeschwindigkeit des Sägeaggregates und die Arbeitsgeschwindigkeit der Betätigungsvorrichtung, so zu wählen ist, dass der Austritt des Vorritzsägeblattes an der Plattenoberseite an der gewünschten Stelle erfolgt.

Vorteilhafte Ausgestaltungen der Erfindung sind Gegenstand von Unteransprüchen.

In der Zeichnung ist ein Ausführungsbeispiel der Erfindung stark schematisiert dargestellt. Es zeigen:

Fig. 1 einen Querschnitt durch eine Werkstückplatte in Verbindung mit dem Vorritzsägeblatt und dem Kreissägeblatt eines Sägeaggregates zur Durchführung des entsprechenden Trennschnittes,

Fig. 1a einen Ausschnitt der Werkstückschnittfläche gemäss Fig. 1, in vergrössertem Maßstab,

Fig. 2 eine Vorderansicht des Sägeaggregates in einer ersten Zwischenstellung zu Beginn des Vorritzens,

Fig. 2a einen Schnitt entlang der Linie 2a-2a der Fig. 2,

Fig. 3 eine Darstellung ähnlich Fig. 2, wobei sich das Vorritzsägeblatt in einer zweiten Zwischenstellung zur Herstellung der Vorritznut befindet,

Fig. 4 eine Darstellung ähnlich Fig. 3, wobei sich das Vorritzsägeblatt in seiner oberen Endstellung befindet,

Fig. 5 eine Draufsicht auf einen sich in Vorschubrichtung des Sägeaggregates erstreckenden, die Leitfläche aufweisenden, schienenartigen Träger.

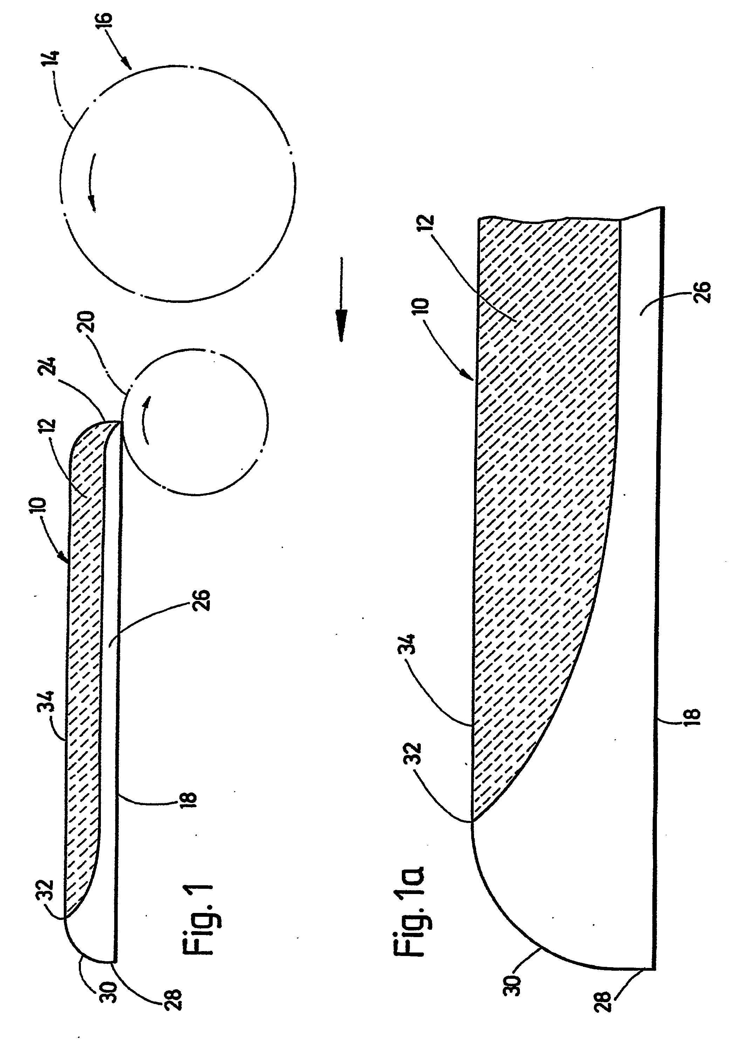

Aus dem in Fig. 1 gezeigten Querschnitt einer vorgeritzten und durchtrennten Werkstückplatte 10 ist bezüglich des Vorritzens folgendes zu ersehen:

Dem eigentlichen Trennschnitt (Schnittfläche 12) geht das Vorritzen voraus, das sicherstellt, dass bei dem durch ein Kreissägeblatt 14 eines Sägeaggregates 16 einer Plattenaufteilsäge durchzuführenden Trennschnitt die an der Plattenunterseite entstehenden Schnittkanten 18 der Trennflächen nicht aussplittern können.

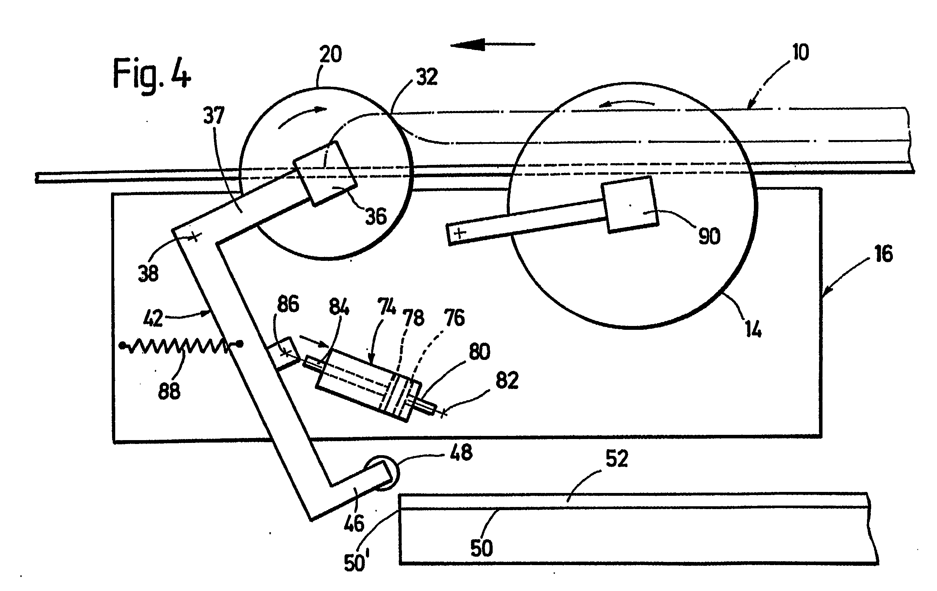

Für das Vorritzen ist dem Kreissägeblatt 14 am Sägeaggregat 16 ein Vorritzsägeblatt 20 vorgeschaltet, das aus einer unteren Ausgangsstellung in eine erste und eine zweite Zwischenstellung und anschliessend in eine obere Endstellung steuerbar ist (Fig. 4).

In der unteren Ausgangsstellung befindet es sich unterhalb der Werkstückauflagefläche 22 eines Werkstückauflagetisches der Plattenaufteilsäge, während es zur Einstellung in seine Zwischenstellungen und in die obere Endstellung aus der Werkstück auflagefläche 22 entsprechend austaucht. Desgleichen befindet sich das Kreissägeblatt 14 vor Beginn einer Sägeoperation unterhalb der Werkstückauflagefläche 22 in der Ruhestellung, aus der es zum Durchtrennen der Werkstückplatte 10 nach oben austaucht.

Zu Beginn einer Sägeoperation werden das Vorritzsägeblatt 20 in seine in Fig. 1 gezeigte erste Zwischenstellung und das Kreissägeblatt 14 in seine obere Endstellung gesteuert, wobei die Ausgangsstellung des Sägeaggregates 16 zur Lage der auf die Werkstückauflagefläche 22 aufgespannten Werkstückplatte 10, insbesondere programmgesteuert, vorzugsweise derart gewählt wird, dass das Vorritzsägeblatt 20 im Bereich der zuerst zu durchtrennenden Plattenkante 24 in die Plattenunterseite eindringt (Fig. 1). Die Eindringtiefe beträgt beispielsweise 1 mm. Im Anschluss daran wird das Vorritzsägeblatt 20 in die zweite Zwischenstellung hochgesteuert, wobei während des Vorschubes eine Vorritznut 26 mit einer Tiefe von vorzugsweise 3 bis 5 mm eingeformt wird. Das Hochfahren in die zweite Zwischenstellung wird derart gesteuert, dass die eigentliche Vorritznut 26 kurz hinter der Plattenkante 24 ansteigt.

Handelt es sich nun um eine insbesondere beschichtete Werkstückplatte 10, deren sich zur Vorschubrichtung senkrecht und parallel zur Werkstückauflagefläche 22 erstreckenden Plattenkanten 24 und 28, wie Fig. 1 zeigt, im oberen Bereich abgerundet sind, so ist, um beim Durchsägen der Werkstückplatte 10 im Bereich der zuletzt zu durchtrennenden Plattenkante 28 ein Ausreissen der dabei entstehenden, konvex gekrümmten Schnittkante 30 zu vermeiden, die Eingriffstiefe der Vorritznut 26 sukzessive in Richtung auf die obere Endstellung des Vorritzsägeblattes 20 (Fig. 4) so zu verändern, dass diese im Übergangs punkt 32 der abgerundeten Schnittkante 30 in die obere, ebene Plattenfläche 34 aus der Werkstückplatte 10 austritt.

Die Steuerung des Vorritzsägeblattes 20 ist nun derart ausgelegt, dass der gewünschte Übergangspunkt 32 der Vorritznut 26 an der oberen Plattenfläche 34 bei jeder möglichen Vorschubgeschwindigkeit exakt eingehalten wird.

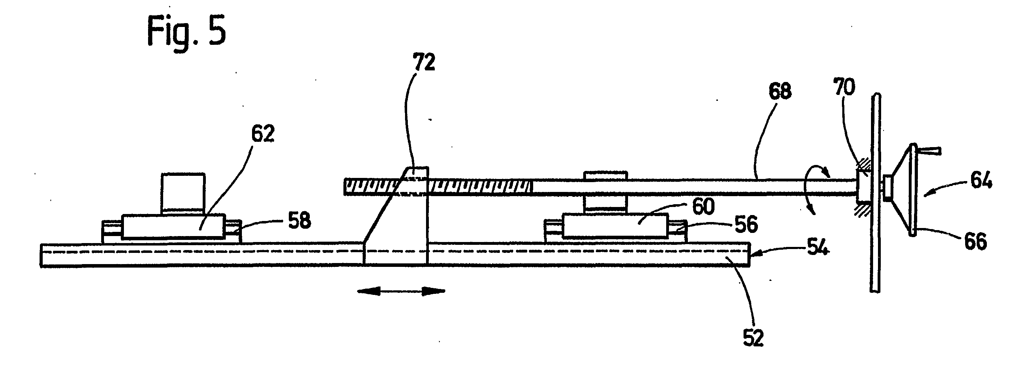

Zu diesem Zweck ist das Vorritzsägeblatt 20 samt Antriebsmotor, welcher der Einfachheit halber nicht dargestellt ist, an einem Support 36 gelagert, der seinerseits an einem Tragarm 37 einer bei 38 an einem Sägewagen 40 schwenkbar gelagerten Wippe 42 sitzt. Mit 44 ist ein sich vom Tragarm 37 nach unten wegerstreckender Führungsarm bezeichnet, der am unteren Ende an einem abgewinkelten Armendstück 46 als Tastglied 48 eine Führungsrolle trägt, der eine ebene, in Vorschubrichtung des Sägewagens 40 sich vorzugsweise horizontal erstreckende, feststehende Leitfläche 50 zugeordnet ist. Diese befindet sich vorzugsweise an der Unterseite eines horizontalen Schenkels 52 eines schienenartigen Trägers 54, der rückseitig, wie Fig. 5 zeigt, beispielsweise zwei Führungselemente 56 und 58 trägt, die an Führungsvorrichtungen 60 bzw. 62 verschiebbar und feststellbar geführt sind.

Zur Längsverstellung des Trägers 54 dient eine Verstellvorrichtung 64, die beispielsweise manuell zu betätigen ist und hierzu eine mittels eines Handrades 66 verdrehbare Gewindespindel 68 aufweist, die einerseits in einem Lagerbock 70 verdrehbar, jedoch axial unverstellbar gelagert ist und die andererseits in ein Innengewinde eines Mitnehmerarmes 72 eingreift, der am Träger 54 befestigt ist.

Zur Betätigung der Wippe 42 dient vorzugsweise ein druckmediumbetätigtes Zylinderaggregat 74, das einen sog. Tandemzylinder bildet und zwei koaxiale Arbeitskolben 76 und 78 aufweist. Der Arbeitskolben 76 ist mit einer Kolbenstange 80 bei 82 und der Arbeitskolben 78 mit einer Kolbenstange 84 bei 86 am Führungsarm 44 angelenkt.

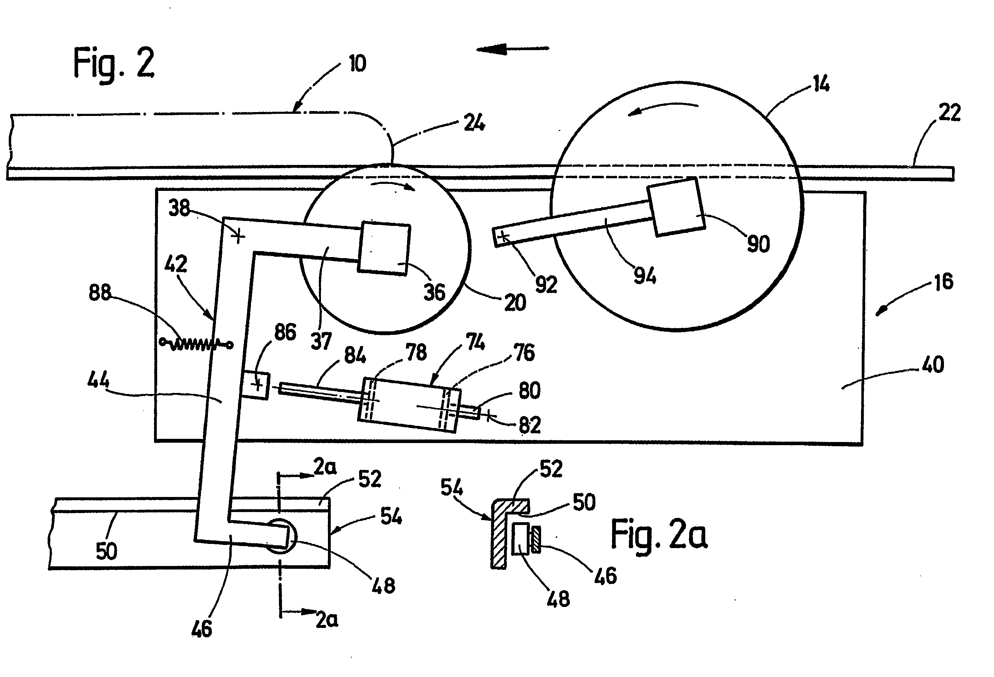

Der maximale Hubweg des Arbeitskolbens 76 bestimmt den Weg des Vorritzsägeblattes 20, ausgehend von dessen unterer Ausgangsstellung, in dessen erste Zwischenstellung (Fig. 2). Beim Verschwenken der Wippe 42 verbleibt dabei der Arbeitskolben 78 in seiner in Fig. 2 gezeigten Ausgangsstellung, und der Arbeitskolben 76 arbeitet gegen eine Zugfeder 88.

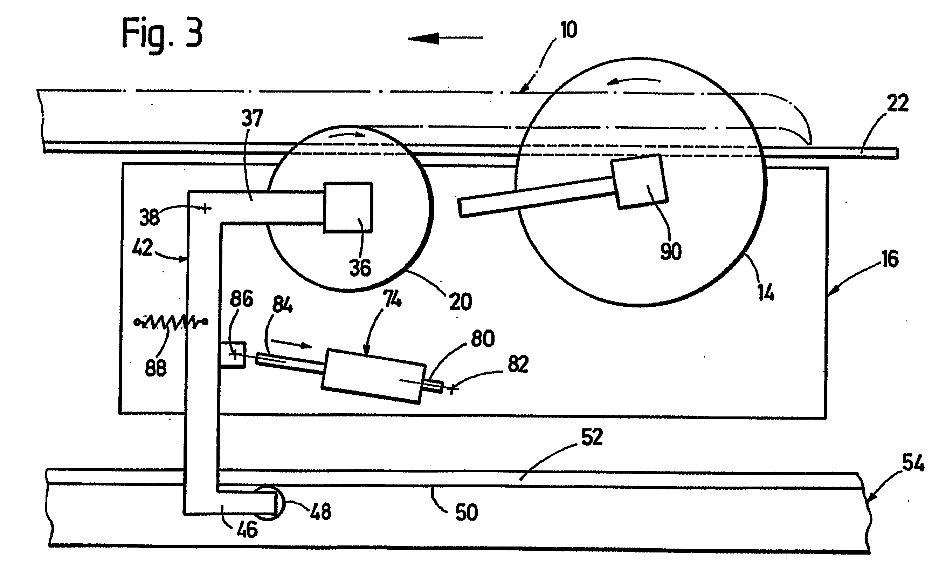

Wie Fig. 2 zeigt, bleibt in der ersten Zwischenstellung das Tastglied 48 mit der Leitfläche 50 noch berührungslos. Wird anschliessend der Arbeitskolben 78 zum Hochfahren des Vorritzsägeblattes 20 in seine zweite Zwischenstellung aktiviert, ist diese erreicht, sobald das Tastglied 48 an der Leitfläche 50 zur Anlage kommt, an der es sich dann über eine vorbestimmte Strecke entlang bewegt, bei welcher Bewegung die Vorritznut 26 in einer Tiefe von beispielsweise 3 bis 5 mm eingeformt wird (Fig. 3). Der Auslauf der Vorritznut 26 im Übergangspunkt 32 an der Plattenoberseite wird durch die gemäss Fig. 4 linke Endkante 50' der Leitfläche 50 sowie durch die gegebene Vorschubgeschwindigkeit bestimmt.

Im Moment des Ablaufens des rollenförmigen Tastgliedes 48 von der Leitfläche 50 ist der aktivierte Arbeitskolben 78 in der Lage, die Wippe 42 in eine der oberen Endstellung des Vorritzsägeblattes 20 entsprechende Endlage zu verschwenken (Fig. 4), die durch die Endstellung des Arbeitskolbens 78 im Zylinderaggregat 74 bestimmt ist (Fig. 4).

Die Position des Übergangspunktes 32 der Vorritznut 26 an der Plattenoberseite 34 ist somit von mehreren Parametern abhängig, nämlich von der Lage der zum Ablaufen des Tastgliedes 48 bestimmten Leitflächenendkante 50', von der Grösse der Vorschubgeschwindigkeit und von der Arbeitsgeschwindigkeit des Arbeitskolbens 78. Diese Position lässt sich auf einfachem Wege empirisch ermitteln durch entsprechende Längsverstellung des schienenartigen Trägers 54 mittels der durch das Handrad 66 zu verdrehenden Gewindespindel 68.

Wie aus den Fig. 2 bis 4 ersichtlich ist, sitzt das Kreissägeblatt 14, vorzugsweise samt Antriebsmotor, der nicht dargestellt ist, auf einem Lagerkörper 90, der seinerseits am Vorderende eines im Sägewagen 40 bei 92 verschwenkbar gelagerten Tragarmes 94 angeordnet ist und durch eine geeignete Betätigungsvorrichtung, beispielsweise pneumatisch oder hydraulisch, nach oben und unten verschwenkbar ist.

Der Zeitpunkt, in welchem die Vorritzung an der Plattenunterseite zu beginnen hat und der Trennschnitt zu beenden ist, wird vorzugsweise durch ein Steuerprogramm festgelegt. Es können hierzu jedoch auch Steuermittel, wie anschlag- oder kurvengesteuerte Endschalter od.dgl., eingesetzt werden. Ebenso kann die Betätigungsvorrichtung zum Hochsteuern des Vorritzsägeblattes auch eine andere Ausbildung aufweisen, wobei im einfachsten Falle eine Zug- oder Druckfeder mit kurven- oder magnetgesteuerter Federsperre zu deren Freigabe vorgeshen sein könnte.

Es ist klar, dass die Leitfläche 50 nicht horizontal verlaufen muss; diese könnte auch vertikal angeordnet sein, wobei in diesem Falle lediglich die mechanischen Übertragungsmittel entsprechend anzupassen wären. Wesentlich ist somit lediglich, dass der horizontal verlaufende Abschnitt der Vorritznut 26 durch Ablaufen des Tastgliedes 48 von der Leitfläche 50 unterbrochen wird und die Lage der Leitflächenendkante 50' in Verbindung mit den oben angeführten Parametern die Austrittsstelle der Vorritznut 26 an der Plattenoberseite bestimmt.

## Patentansprüche

1. Vorrichtung zur Einstellung von Eingriffstiefen eines Vorritzsägeblattes während des Vorschubes eines verfahrbaren Sägeaggregates beim Vorritzen der Platten und der Seite von Werkstückplatten, die mindestens eine quer zur Trennebene verlaufende, im oberen Bereich abgerundete Plattenkante aufweisen, welches Vorritzsägeblatt an einem zwischen zwei Endstellungen vertikal beweglichen Support gelagert ist, der mindestens über einen Teil der Vorschubstrecke durch ein sich entlang einer Leitfläche bewegendes Tastglied steuerbar ist und der zu Beginn des Vorritzens in mindestens einer einer vorbestimmten Eingriffstiefe entsprechenden Zwischenstellung und in der Vorschubendphase zur kontinuierlichen Vergrösserung der Eingriffstiefe derart steuerbar ist, dass eine in die Plattenunterseite eingeformte Vorritznut an der im oberen Bereich abgerundeten Plattenkante im Übergangspunkt des abgerundeten Kantenflächenteils in die obere, ebene Plattenfläche aus der Werkstückplatte ausmündet, **dadurch gekennzeichnet,** dass zur Einstellung des Supports (36) in die Zwischenstellung dieser gemeinsam mit dem Tastglied (48) durch eine Betätigungsvorrichtung (74) in Richtung auf die obere Endstellung verstellbar ist, dass die der Zwischenstellung entsprechende Position des Supports (36) während der zu durchfahrenden Vorschubstrecke durch Anlegen des Tastgliedes (48) an die sich in Vorschubrichtung erstreckende, ebene Leitfläche (50) definiert ist, und dass zur kontinuierlichen Vergrösserung der Eingriffstiefe des Vorritzsägeblattes (20) in der Vorschubendphase das Tastglied (48) von der Leitfläche (50) freikommt und der Support (36) durch die Betätigungsvorrichtung (74) in seine obere Endstellung steuerbar ist.

2. Vorrichtung nach Anspruch 1, dadurch gekennzeichnet, dass die Lage des in der Vorschubendphase die Änderung der Eingriffstiefe bestimmenden Endes (50') der Leitfläche (50) in Vorschubrichtung des Sägeaggregates (12) verstellbar und feststellbar ist.

3. Vorrichtung nach Anspruch 1 oder 2, dadurch gekennzeichnet, dass die Leitfläche (50) an einem schienenartigen, in Längsrichtung verstell- und feststellbaren Träger (54) vorgesehen ist.

4. Vorrichtung nach einem der vorhergehenden Ansprüche, dadurch gekennzeichnet, dass die Betätigungsvorrichtung ein druckmediumbetätigtes Zylinderaggregat (74) aufweist, das ständig versucht, den Support (36) in seine obere Endstellung zu bewegen bzw. das mit diesem gekoppelte Tastglied (48) an die Leitfläche (50) anzulegen.

5. Vorrichtung nach Anspruch 4, dadurch gekennzeichnet, dass der Support (36) am einen Arm (37) und das Tastglied (48) am anderen Arm (44, 46) einer um eine Schwenkachse (38) verschwenkbaren Wippe (42) angeordnet ist.

## Revendications

1. Dispositif pour l'ajustement de profondeurs d'attaque d'une lame de scie de prérainurage pendant l'avance d'un appareil de sciage mobile, lors du prérainurage des panneaux et du côté de pièces-panneaux qui présentent au moins un bord arrondi dans la région supérieure et s'étendant transversalement au plan de partage, ladite lame de scie de prérainurage étant montée sur un support mobile verticalement entre deux positions extrêmes, lequel support est apte à être commandé, sur au moins une partie du trajet d'avance, par un organe palpeur se déplaçant le long d'une surface directrice et peut être commandé, au début du prérainurage, à au moins une position intermédiaire correspondant à une profondeur d'attaque prédéterminée et, dans la phase finale de l'avance peut être commandé, pour l'accroissement continu de la profondeur d'attaque, de manière telle qu'une prérainure formée dans le côté dessous de la plaque débouche hors de la pièce-panneau, à l'endroit du bord de celle-ci arrondi dans la région supérieure, au point de la transition de la partie de surface de bord arrondie à la surface supérieure plane, caractérisé par le fait que, pour le réglage du support (36) à la position intermédiaire, celui-ci est apte à avoir sa position modifiée avec l'organe palpeur (48), par un dispositif actionneur (74), en direction de la position extrême supérieure, par le fait que la position du support (36) correspondant à la position intermédiaire, pendant le trajet d'avance à parcourir, est définie par l'application de l'organe palpeur (48) contre la surface directrice plane (50) s'étendant dans la direction de l'avance, et par le fait que, pour l'augmentation continue de la profondeur d'attaque de la lame de scie de prérainurage (20), au cours de la phase finale de l'avance, l'organe palpeur (48) peut, sans contact avec la surface directrice (50), être commandé ainsi que le support (36), pour venir à sa position extrême supérieure, par le dispositif d'actionnement (74).

2. Dispositif selon revendication 1, caractérisé par le fait que la position de l'extrémité (50) de la surface directrice (50), cette extrémité déterminant la variation de la profondeur d'attaque lors de la phase finale de l'avance, peut être modifiée et fixée dans la direction de l'avance de l'appareil de sciage (12).

3. Dispositif selon revendication 1 ou 2, caractérisé par le fait que la surface directrice (50) est prévue sur un support (54) du genre rail dont la position peut être fixée et modifiée en direction longitudinale.

4. Dispositif selon l'une quelconque des revendications précédentes, caractérisé par le fait que le dispositif d'actionnement présente un vérin à cylindre (74) actionné par fluide de pression, ce vérin tentant constamment de déplacer le support (36) à sa position extrême supérieure, ou encore d'appliquer contre la surface directrice (50) l'organe palpeur (48) couplé à ce support.

5. Dispositif selon revendication 4, caractérisé par le fait que le support (36) est agencé sur un bras (37) et l'organe palpeur (48) sur l'autre bras (44, 46) d'une bascule (42) pouvant pivoter autour d'un axe de pivotement (38).

**Claims**

1. Device for adjusting penetration depths of a prescoring saw blade during the feed of a moveable sawing unit for pre-scoring the panels and the side of workpiece panels having at least one panel edge which extends transversely to the severing plane and which is rounded off in the upper region thereof, said prescoring saw blade being mounted on a support which is vertically moveable between two end positions and which is controllable at least throughout part of the feed path by a tactile element moving along a directing surface, said support being drivable, at the beginning of the pre-scoring, into at least one intermediate position corresponding to a predetermined penetration depth, and, in the end phase of the feed, in order to continuously increase the penetration depth, in such a way that a pre-score groove formed in the underside of the panel emerges from the workpiece panel at said panel edge which is rounded off in the upper region thereof, at the point of transition between the rounded-off edge surface portion and the upper, planar panel surface, characterised in that for adjustment of said support (36) to said intermediate position, said support (36) is adjustable jointly with said tactile element (48) by an actuating device (74) in the direction towards the upper end position, in that the position of said support (36) corresponding to said intermediate position along said feed path to be covered is defined by said tactile element (48) contacting said planar directing surface (50) extending in said feed direction, and in that in order to continuously increase the penetration depth of said pre-scoring saw blade (20) in said end phase of said feed, said tactile element (48) is not in contact with said directing surface (50), and said support (36) is drivable into its upper end position by said actuating device (74).

2. Device as defined in claim 1, characterised in that the position of the end (50') of said directing surface (50) determining the change in the penetration depth in said end phase of said feed is adjustable and immobilizeable in said direction of feed of said sawing unit (12).

3. Device as defined in claim 1 or 2, characterised in that said directing surface (50) is provided on a rail-type carrier (54) which is adjustable and immobilizeable in the longitudinal direction.

4. Device as defined in one of the preceding claims, characterised in that said actuating device comprises a pressure-medium-operated cylinder unit (74) which constantly attempts to move said support (36) into its upper end position and to bring said tactile element (48) coupled with said support (36) into contact with said directing surface (50), respectively.

5. Device as defined in claim 4, characterised in that said support (36) is arranged on one arm (37) and said tactile element (48) on the other arm (44, 46) of a rocker (42) which is pivotable about a pivot axis (38).

Fig. 1

Fig. 1a

Fig. 2

Fig. 2a

EP 0 291 782 B1

Fig. 3

EP 0 291 782 B1

Fig. 4

Fig. 5

EP 0 291 782 B1